# EUROPEAN PATENT SPECIFICATION

(11) **EP 1 729 315 B1**
(45) Date of publication and mention of the grant of the patent: **29.08.2007**
(21) Application number: 05253446.8
(22) Date of filing: 03.06.2005
(51) Int. Cl.: H01H 13/85, G06F 3/023, H04M 1/23

(54) **Handheld electronic device and keypad having tactile features**
Tragbares electronisches Gerät und Tastatur mit ertastbaren Merkmalen
Appareil électronique portatif et clavier avec caractéristiques haptiques

(43) Date of publication of application: 06.12.2006
(73) Proprietor: Research In Motion Limited, Waterloo, Ontario N2L 3W8 (CA)
(72) Inventor: Dabov, Teodor, Toronto, Ontario M4J 4E9 (CA)
(74) Representative: Roberts, Gwilym Vaughan

(56) References cited:
- EP-A- 1 156 643
- FR-A- 2 435 353
- GB-A- 2 084 802
- GB-A- 2 402 650

## Description

### BACKGROUND

### Field

The invention relates generally to handheld electronic devices and, more particularly, to a handheld electronic device having a keypad that includes tactile features.

### Background

Numerous types of handheld electronic devices are known. Examples of handheld electronic devices include, for instance, personal data assistants (PDAs), handheld computers, two-way pagers, cellular telephones, and the like. Many handheld electronic devices also feature wireless communication capability.

Handheld electronic devices are generally intended to be portable and thus are of a relatively compact configuration in which keys and other input devices often perform multiple functions under certain circumstances or may otherwise have multiple aspects or features assigned thereto. For instance, a handheld electronic device may include a keypad having a plurality of keys, with certain of the keys being usable for entering text during a text entry operation, and with the same keys being further usable for dialing a telephone number during a telephone operation. While such handheld electronic devices have been generally effective for their intended purposes, such devices have not, however, been without limitation.

Some handheld electronic devices are configured to include a keypad that includes keys in addition to such keys that can be employed both during a text entry operation and during a telephone operation. Additionally or alternatively, the keys that can be employed during the telephone operation may be disposed adjacent one another with minimal space therebetween. A user of such a handheld electronic device can experience difficulty dialing a telephone number while driving since the user's eyes desirably will not leave the road while dialing. Known keypads have provided few, if any, features that might enable a user to dial a telephone number without looking directly at the handheld electronic device. For instance GB-A-2,402,650 is directed towards a keypad having alphanumeric keys, wherein the numeric telephone portions 0-9 are of a colour scheme that is different from that of the QWERTY key portions. It thus would be desirable to provide an improved handheld electronic device and a keypad that provide features that help a user dial a telephone number.

### SUMMARY

Embodiments of the invention provide an improved handheld electronic device and keypad that include tactile features that help a user to identify certain keys of the keypad. In the present exemplary embodiment, the keypad includes keys in a predetermined region that can be employed during a telephone operation. The keypad additionally includes other keys outside the predetermined region. The keys in the predetermined region include tactile features that enable the user to identify and actuate the keys in the predetermined region during a telephone operation with the user directing minimal visual attention to the handheld electronic device.

At least some embodiments of the invention provide an improved handheld electronic device and a keypad wherein the keypad includes tactile features that enable a user to distinguish keys that are disposed in a predetermined region of the keypad from other keys of the keypad that are disposed outside the predetermined region.

At least some embodiments of the ivention provide an improved handheld electronic device and keypad that facilitate operation of the device during a telephone operation.

At least some embodiments of the invention provide an improved handheld electronic device and keypad wherein the keypad is configured to enable the user to easily identify various keys in a predetermined region of the keypad with the user directing minimal visual attention to the handheld electronic device.

According to one aspect of the invention there is provided an improved keypad for a handheld electronic device as defined in claim 1 of the appended claims.

According to another aspect of the invention, there is provided an improved handheld electronic device as defined in claim 19.

**[0010a]** Features of embodiments of the invention are defined in the dependent claims.

### BRIEF DESCRIPTION OF THE DRAWINGS

A further understanding can be gained from the following Description when read in conjunction with the accompanying drawings in which:
Fig. 1 is a front elevational view of an improved handheld electronic device in accordance with the invention that comprises an improved keypad in accordance with the invention;
Fig. 2 is a schematic view of the handheld electronic device of Fig. 1;
Fig. 3 is a perspective view of the keypad; and
Fig. 4 is another perspective view of the keypad.

Similar numerals refer to similar parts throughout the specification.

### DESCRIPTION

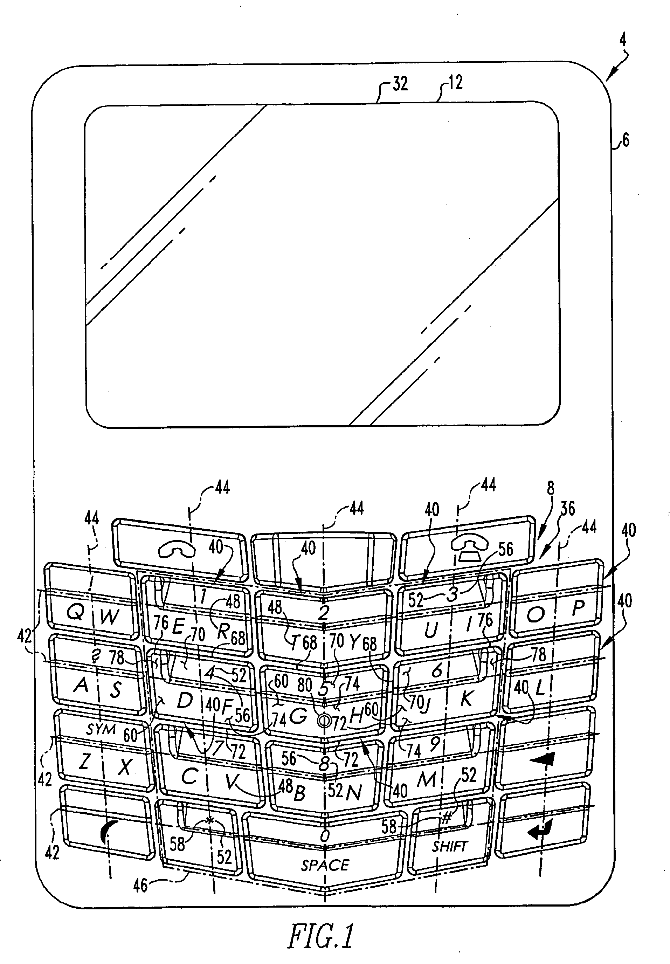

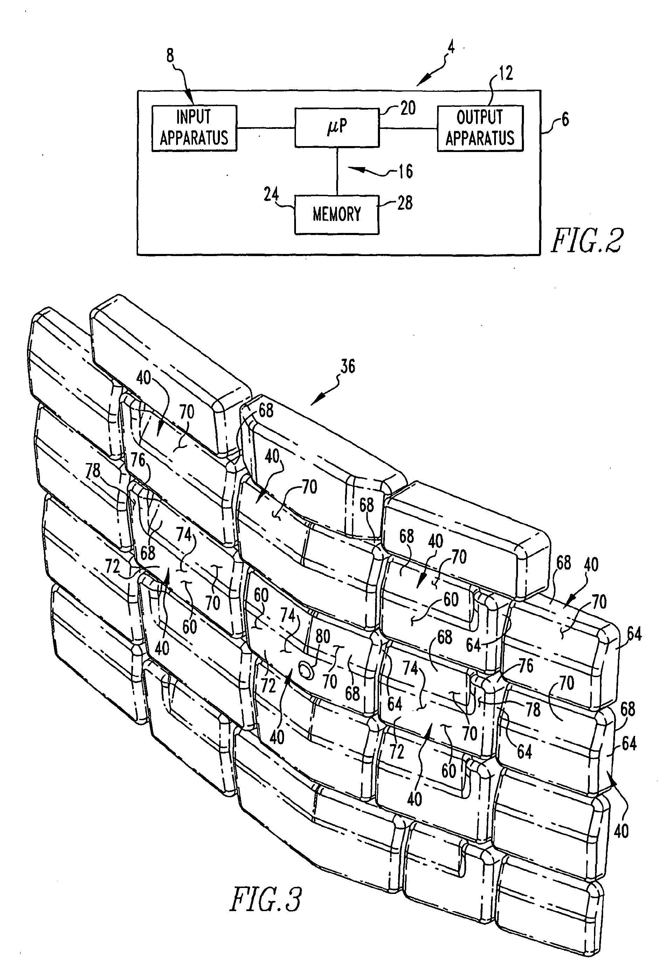

An improved handheld electronic device 4 in accordance with the invention is depicted generally in Fig. 1 and is depicted schematically in Fig. 2. The handheld electronic device 4 includes a housing 6, and further includes an input apparatus 8, an output apparatus 12, and a processor apparatus 16 disposed on the housing. The processor apparatus 16 includes a processor 20 and a memory 24. The processor 20 may be, for instance and without limitation, a microprocessor (µP) that is responsive to inputs from the input apparatus 8 and provides output signals to the output apparatus 12. The memory 24 can include any one or more of RAM, ROM, EPROM, and/or EEPROM without limitation. The memory 24 includes a number of routines 28 stored therein that are executable on the processor 20. As employed herein, the expression "a number of and variations thereof shall refer broadly to any nonzero quantity, including a quantity of one. The routines 28 in the present exemplary embodiment include a telephone routine that is executable on the processor 20 to initiate and carry on a telephone call. Examples of handheld electronic devices are included in U.S. Patent Nos. 6,452,588 and 6,489,950.

As can be seen in Fig. 1, the output apparatus 12 includes a display 32. The output apparatus 12 can additionally or alternatively include other output devices such as lights, speakers, and the like without limitation.

The input apparatus 8 includes a keypad 36 comprising a plurality of keys 40 arranged in a plurality of rows 42 and a plurality of columns 44. The keypad 36 in the present exemplary embodiment is a bridgeless keypad, meaning that no frame portions exist between adjacent keys 40. A plurality of the keys 40 are disposed in a predetermined region 46 of the keypad which, in the present exemplary embodiment, is a telephone keypad. In this regard, it can be seen that many of the keys 40 have one or two linguistic elements 48 assigned thereto. The present exemplary linguistic elements 48 are in the form of Latin letters, although in other embodiments the linguistic elements 48 could be other letters or characters, ideograms, strokes, and the like without limitation.

The keys 40 disposed within the region 46 each additionally have a telephone input character 52. assigned thereto. The exemplary telephone input characters 52 depicted herein include the ten Arabic digits 56 numbered "0" through "9", and further include a pair of symbols 58 which, in the present exemplary embodiment, are an asterisk "*" and a pound sign "#". The telephone input characters 52 are assigned to the keys 40 within the predetermined region 46 in such a fashion that the keys 40 within the predetermined region 46 are arranged in a conventional touch-tone telephone configuration. When the telephone routine of the routines 28 is active on the processor 20, an actuation of any of the keys 40 in the predetermined region 46 will be detected by the processor 20 as being an input of the telephone input character 52 assigned to the actuated key 40.

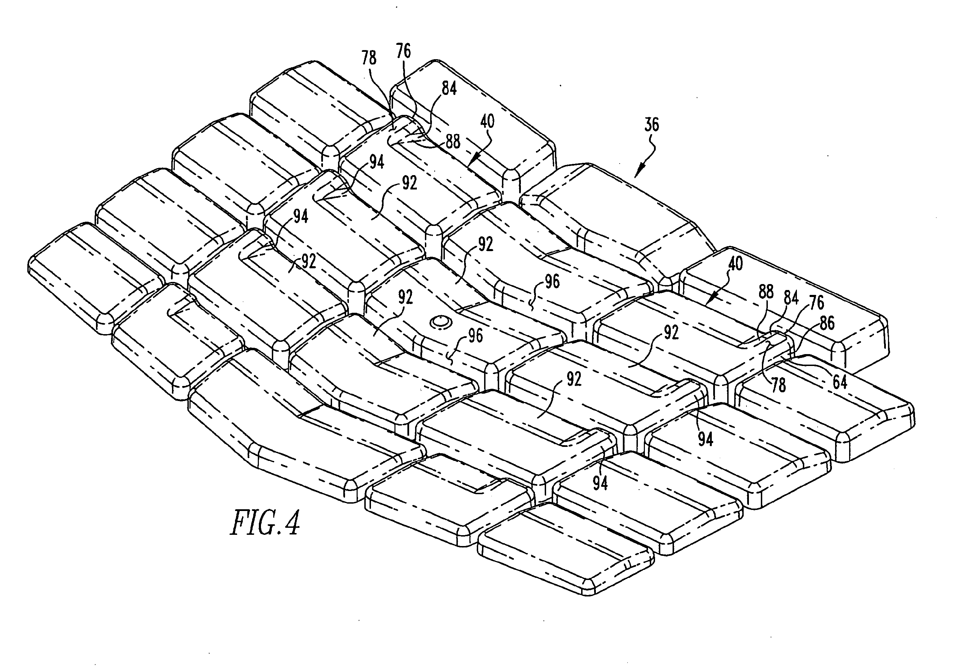

Each key 40 includes an engagement surface 60 and a skirt surface 64 (Figs. 3 and 4). The engagement surface 60 is engageable by a user to actuate the key 40. The key 40 is actuated by the user in an actuation direction which, in the exemplary embodiment depicted herein, is directly into the page of Fig. 1. At least a portion of the skirt surface 64 of each key 40 is oriented generally parallel with the actuation direction, and this helps to avoid interference between adjacent keys 40 when one of the adjacent keys 40 is being actuated.

As can be understood from Figs. 1 and 3-4, many of the keys 40 include a first portion 68 having a first surface 70, and further include a second portion 72 having a second surface 74. The first and second surfaces 70 and 74 are each a part of the engagement surface 60 of the key 40. As can be best understood from Figs. 3 and 4, the first surface 70 is oriented oblique to the second surface 74. As employed herein, the expression "oblique" and variations thereof shall refer broadly to a relationship that is neither perpendicular nor paparallel and does not imply or require planar shapes.

As can be best understood from Figs. 3 and 4, the first surfaces 70 of the keys 40 are generally each disposed adjacent another key 40 in the same column, but the portion of the first surface 70 adjacent the adjacent key 40 is offset in the actuation direction from the engagement surface 60. More particularly, the first surface 70 is adjacent the skirt surface 64 of the adjacent key 40.

Some of the keys 40 within the predetermined region 46 additionally include a third portion 76 having a third surface 78. The third surface 78 is a portion of the engagement surface 60 of the key. In the present exemplary embodiment, the third portion 76 is a protrusion that protrudes from key 40 at a location adjacent the first surface 70. One of the keys 40 within the predetermined region 46 includes a Braille dot 80 which is a protrusion that protrudes outwardly from the second surface 74.

Each third surface 78 can be said to include a first lateral surface 84 (Fig. 4) and a second lateral surface 86. The first lateral surfaces 84 of the various keys 40 face generally toward the column 44 within which the key 40 having the Braille dot 80 is disposed. The second lateral surfaces 86 face away from the column 44 within which the key 40 having the Braille dot 80 is disposed. The first lateral surface 84 has a first profile, and the second lateral surface 86 has a second profile. It can be seen that the first profiles are different than the second profiles. It can be seen, however, that the first profiles of the first lateral surfaces of the keys 40 within any given row 40 generally face one another and are alike. In the present exemplary embodiment, the first profiles are alike in that they are mirror images of one another.

Part of the reason the first profile of the first lateral surface 84 is different than the second profile of the second lateral surface 86 is that the key 40 includes a fillet 88 adjacent the first surface 70. The first lateral surface extends from the first surface 70 across the fillet 88. In contrast, the second lateral surface 86 is a portion of the skirt surface 64 of the key 40. The fillet 88 provides to the first lateral surface 84 a transition from the first surface 70 into the protrusion provided by the third portion 76.

It thus can be seen that the offsetting of the first surfaces 70 from the engagement surfaces 60 of adjacent keys 40 provides a first tactile feature 92 to each such key 40 having an offset first surface 70, with the first tactile feature 92 providing a tactile distinction between the key having the offset first surface 70 and the adjacent key 40 having the engagement surface 60 from which the aforementioned first surface 70 is offset in the actuation direction. The first tactile features 92 thus provide a tactile differentiation between adjacent keys 40 when moving between keys along the direction of any of the columns 44.

The third portions 76 each provide a second tactile feature 94 that can be perceived by a user when moving among adjacent keys 40 within any particular row 42. Moreover, since the first profiles of the first lateral surfaces 84 are different than the second profiles of the second lateral surfaces 86, the user additionally can detect on which side of a third portion 76 the user is touching, such as with the user's finger, which enables the user to distinguish a key 40 that includes a third portion 76 and is disposed in any particular row 42 from the other key 40 in the same row 42 and having a third portion 76. The Braille dot 80 provides an alternate tactile feature which enables the user to identify the key 40 on which the Braille dot 80 is disposed and to distinguish such key 40 from other keys in the same column 44.

It is noted that the third portions 76 are depicted herein as being protrusions extending outwardly from a location adjacent the first surface 70. It is noted, however, that the third portions 76 could be of other configurations that still provide a tactile distinction between them and an adjacent key 40 without departing from the present concept.

It also can be seen that the first surfaces 70 of the keys 40 in any given row 42 within the predetermined region 46, along with the adjacent portions of the skirt surfaces 64 of keys 40 adjacent thereto, form a channel 96 that is open and extends substantially continuously between the third portions 76 of the keys 40 in such row 42. The channels 96, in combination with the third portions 76 at alternate ends of such channels 96, enable the user to rapidly ascertain the bounds of the predetermined region 46 and to thereby facilitate actuation of desired keys 40 during a telephone operation.

As can be seen in Figs. 3 and 4, a portion of the third surface 78 of any given key 40 is oriented substantially coplanar with the second surface 74 of such key. The first surface 70 of such a key 40 can thus be seen as being almost an indentation in to the key 40. It is understood, however, that other configurations can be employed without departing from the present concept.

The first and second tactile features 92 and 94 thus enable a user to distinguish the keys 40 within the predetermined region 46 from keys 40 outside the predetermined region 46. Additionally, the first and second tactile features 92 and 94 enable the user to distinguish among keys 40 within the predetermined region 46 in directions both along the columns 44 as well as along the rows 42. This is particularly advantageous in the present exemplary keypad 36 which includes, in addition in addition to the three columns 44 within the predetermined region 46, a pair of columns 44 that are disposed at alternate sides of the predetermined region 46, whereby the predetermined region 46 is disposed between such additional columns 44. By providing the third portions 76, the user can rapidly distinguish between keys 40 inside the predetermined region 46 and keys outside the predetermined region 46 to facilitate actuation of keys 40 during the telephone operation.

It can further be seen that the telephone input characters 52 are disposed on the first surfaces 70 of the keys 40. Since the first surfaces 70 are oriented oblique to the second surfaces 74, the user can quickly identify the telephone input characters 52 and the keys 40 upon which such telephone input characters 52 are disposed merely by slightly reorienting the handheld electronic device 4 with respect to a light source so that light shines on the first surfaces 70 differently than on the second surfaces 74. The user therefore can advantageously rapidly distinguish between the keys 40 having a telephone input character 52 assigned thereto and those not having such a telephone input character 52 assigned thereto to facilitate a telephone operation. In this regard, the telephone input characters 52 need not be printed in a different color than the linguistic elements 48 and other symbols, etc., to achieve highlighting, in effect, to the user's attention. This enables a cost savings resulting from printing on the device 4 in fewer colors.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A keypad (36) for a handheld electronic device (4), the keypad comprising a number of keys (40) arranged in a plurality of rows (42) and a plurality of columns (44), each key having an engagement surface (60) that is structured to be engaged by a user in actuating the key and a skirt surface (64) adjacent the engagement surface, each key of at least a portion of the number of keys comprising a first portion (68) and a second portion (72), the first portion having a first surface (70), the second portion having a second surface (74), **characterized by**:
at least a portion of the first surface disposed adjacent at least a portion of the second surface being disposed oblique to the at least a portion of the second surface, at least a portion of the second surface being disposed adjacent at least a portion of the skirt surface, at least a portion of each of the first and second surfaces being at least a portion of the engagement surface of the key;
at least a portion of a first surface of a key disposed in a predetermined row and in a predetermined column being disposed adjacent at least a portion of a first surface of an adjacent key in the predetermined row;
at least a portion of the first surface of the key disposed in the predetermined row and in the predetermined column being offset in an actuation direction from at least a portion of an engagement surface of an adjacent key in the predetermined column and being disposed adjacent at least a portion of a skirt surface of the adjacent key in the predetermined column to provide a tactile distinction between the key disposed in the predetermined row and in the predetermined column and the adjacent key in the predetermined column; and
at least a first key of the at least a portion of the number of keys additionally comprising a third portion (76, 80), the at least a first key being disposed in a given row, the third portion comprising a tactile feature (94, 80) structured to provide a tactile distinction between the at least a first key and an adjacent key in the given row.

2. The keypad of Claim I wherein at least a portion of the tactile feature is disposed between the first surface of the at least a first key and the engagement surface of the adjacent key in the given row.

3. The keypad of Claim 2 wherein the tactile feature is a protrusion that protrudes outwardly from the at least a first key.

4. The keypad of Claim 3 wherein at least a portion of the tactile feature is disposed at a location adjacent the first surface.

5. The keypad of Claim 1 wherein a second key of the at least a portion of the number of keys comprises a third portion (76), the second key being disposed in the given row, the third portion comprising a tactile feature (94) structured to provide a tactile distinction between the second key and an adjacent key in the given row, the at least first and second keys being disposed one of within a predetermined region (46) of the keypad and adjacent the predetermined region, the tactile features of the at least first and second keys being structured to provide a tactile distinction between the keys disposed within the predetermined region and the keys disposed outside the predetermined region.

6. The keypad of Claim 5 wherein at least a portion of the tactile feature of the at least a first key is disposed between the first surface of the at least a first key and the engagement surface of an adjacent key in the given row, and wherein at least a portion of the tactile feature of the second key is disposed between the first surface of the second key and the engagement surface of an adjacent key in the given row.

7. The keypad of Claim 6 wherein a third key of the at least a portion of the number of keys is disposed in the given row and in a particular column between the at least first and second keys, the third key comprising a tactile feature (80), and wherein the tactile feature of the third key is disposed between the first surface of the third key and an adjacent key in the particular column.

8. The keypad of Claim 5 wherein the second surface of the at least a first key includes a first lateral surface (84) and a second lateral surface (86), the first lateral surface having a first profile and being disposed adjacent the first surface of the at least a first key, the second lateral surface having a second profile different than the first profile.

9. The keypad of Claim 8 wherein the first lateral surface includes a fillet (88) adjacent the first surface of the at least a first key, and wherein the second lateral surface is at least a portion of the skirt surface of the at least a first key.

10. The keypad of Claim 8 wherein the second portion of the second key includes a first lateral surface and a second lateral surface, the first lateral surface of the second key having a first profile and being disposed adjacent the first surface of the second key, the second lateral surface of the second key having a second profile different than the first profile of the second key, the first lateral surface of the at least a first key and the first lateral surface of the second key facing generally toward one another, the first profiles being alike.

11. The keypad of Claim 5 wherein the keys within the predetermined region of the keypad each have assigned thereto a character from among the ten Arabic digits, an asterisk, and a pound symbol, and are arranged in a touch-tone telephone layout.

12. The keypad of Claim 5 wherein the keys within the predetermined region of the keypad are arranged in a touch-tone telephone layout and have telephone input characters (52) assigned thereto.

13. The keypad of Claim 12 wherein the keypad includes a first column of keys of the number of keys disposed adjacent the predetermined region and a second column of keys of the number of keys disposed adjacent the predetermined region, the predetermined region being disposed between the first and second columns.

14. The keypad of Claim 12 wherein at least some of the keys in the predetermined region each have a number of linguistic elements (48) assigned thereto, the telephone input characters being depicted on the keys on the first surfaces thereof, the linguistic elements being depicted on the keys on the second surfaces thereof.

15. The keypad of Claim 5 wherein a third key of the at least a portion of the number of keys is disposed between the at least a first key and the second key, the first surfaces of the at least first, second, and third keys and at least a portion of the skirt surfaces of each of a quantity of keys adjacent the at least a first, second, and third keys together at least partially defining an open and substantially continuous channel (96) formed in the keypad.

16. The keypad of Claim 15 wherein the channel extends between the third portions of the at least a first and second keys.

17. The keypad of Claim 15 wherein the keys in the predetermined region are arranged in four rows and three columns in a touch-tone telephone layout, the keys in the predetermined region disposed in a leftmost column of the three columns each having a third portion comprising a tactile feature at a left side of the key, the keys in the predetermined region disposed in a rightmost column of the three columns each having a third portion comprising a tactile feature at a right side of the key.

18. The keypad of Claim 1 wherein the third portion has a third surface (78), at least a portion of the third surface being at least a portion of the engagement surface, at least a portion of the third surface being disposed adjacent and substantially coplanar with at least a portion of the second surface.

19. A handheld electronic device (4) comprising:
a processor apparatus (16) including a processor (20) and a memory (24);
an input apparatus (8) structured to provide input to the processor apparatus;
an output apparatus (12) structured to receive signal from the processor apparatus and to provide output;
wherein the input apparatus includes a keypad (36) according to claim 5 or any one of claim 13 to claim 17.

20. The handheld electronic device of Claim 19 wherein a memory (24) includes a telephone routine (28) that is executable on the processor (20), wherein the keys within the predetermined region are arranged in a touch-tone telephone layout and have telephone input characters (52) assigned thereto, and wherein an actuation of a key within the predetermined region is adapted to provide a telephone input to the telephone routine.

## Patentansprüche

1. Tastatur (36) für eine tragbare elektronische Vorrichtung (4), wobei die Tastatur eine Anzahl von Tasten (40), welche in einer Vielzahl von Reihen (42) und einer Vielzahl von Spalten (44) angeordnet sind, umfasst, wobei jede Taste eine Eingriffsfläche (60), die ausgebildet ist, um von einem Benutzer beim Betätigen der Taste in Eingriff gebracht zu werden, und eine zu der Eingriffsfläche benachbarte Mantelfläche (64), aufweist, wobei jede Taste wenigstens eines Abschnittes der Anzahl von Tasten einen ersten Abschnitt (68) und einen zweiten Abschnitt (72) umfasst, wobei der erste Abschnitt eine erste Fläche (70) aufweist, wobei der zweite Abschnitt eine zweite Fläche (74) aufweist, **gekennzeichnet durch**:
Wenigstens ein Abschnitt der ersten Fläche, die zu wenigstens einem Abschnitt der zweiten Fläche benachbart angeordnet ist, ist schräg zu dem wenigstens einen Abschnitt der zweiten Fläche angeordnet, wenigstens ein Abschnitt der zweiten Fläche ist zu wenigstens einem Abschnitt der Mantelfläche benachbart angeordnet, wenigstens ein Abschnitt von jeweils der ersten und zweiten Fläche ist wenigstens ein Abschnitt der Eingriffsfläche der Taste,
wenigstens ein Abschnitt der ersten Fläche einer Taste, die in einer vorbestimmten Reihe und in einer vorbestimmten Spalte angeordnet ist, ist zu wenigstens einem Abschnitt einer ersten Fläche einer benachbarten Taste in einer vorbestimmten Reihe benachbart angeordnet,
wenigstens ein Abschnitt der ersten Fläche der Taste, die in der vorbestimmten Reihe und in der vorbestimmten Spalte angeordnet ist, ist in einer Betätigungsrichtung von wenigstens einem Abschnitt einer Eingriffsfläche einer benachbarten Taste in der vorbestimmten Spalte versetzt und ist zu wenigstens einem Abschnitt einer Mantelfläche der benachbarten Taste in der vorbestimmten Spalte benachbart angeordnet, um eine taktile Abgrenzung zwischen der Taste, die in der vorbestimmten Reihe und in der vorbestimmten Spalte angeordnet ist, und der benachbarten Taste in der vorbestimmten Spalte vorzusehen, und
wenigstens eine erste Taste des wenigstens einen Abschnittes der Anzahl von Tasten umfasst zusätzlich einen dritten Abschnitt (76, 80), die wenigstens eine erste Taste ist in einer vorgegebenen Reihe angeordnet, der dritte Abschnitt umfasst ein taktiles Merkmal (94, 80), das ausgebildet ist, eine taktile Abgrenzung zwischen der wenigstens einen ersten Taste und einer benachbarten Taste in der vorgegebenen Reihe vorzusehen.

2. Tastatur nach Anspruch 1, wobei wenigstens ein Abschnitt des taktilen Merkmals zwischen der ersten Fläche der wenigstens einen ersten Taste und der Eingriffsfläche der benachbarten Taste in der vorgegebenen Reihe angeordnet ist.

3. Tastatur nach Anspruch 2, wobei das taktile Merkmal ein Vorsprung ist, der von der wenigstens einen ersten Taste nach außen vorspringt.

4. Tastatur nach Anspruch 3, wobei wenigstens eine Abschnitt des taktilen Merkmals an einer Stelle benachbart zu der ersten Fläche angeordnet ist.

5. Tastatur nach Anspruch 1, wobei eine zweite Taste des wenigstens einen Abschnittes der Anzahl von Tasten einen dritten Abschnitt (76) umfasst, wobei die zweite Taste in der vorgegebenen Reihe angeordnet ist, wobei der dritte Abschnitt ein taktiles Merkmal (94), das ausgebildet ist, um eine taktile Abgrenzung zwischen der zweiten Taste und einer benachbarten Taste in der vorgegebenen Reihe vorzusehen, umfasst, wobei die wenigstens erste und zweite Taste innerhalb eines vorbestimmten Bereichs (46) der Tastatur oder zu dem vorbestimmten Bereich benachbart angeordnet ist, wobei die taktilen Merkmale der wenigstens ersten und zweiten Taste ausgebildet sind, um eine taktile Abgrenzung zwischen den Tasten, die innerhalb des vorbestimmten Bereichs angeordnet sind, und den Tasten, die außerhalb des vorbestimmten Bereichs angeordnet sind, vorzusehen.

6. Tastatur nach Anspruch 5, wobei wenigstens ein Abschnitt des taktilen Merkmals der wenigstens einen ersten Taste zwischen der ersten Fläche der wenigstens einen ersten Taste und der Eingriffsfläche einer benachbarten Taste in der vorgegebenen Reihe angeordnet ist und wobei wenigstens eine Abschnitt des taktilen Merkmals der zweiten Taste zwischen der ersten Fläche der zweiten Taste und der Eingriffsfläche einer benachbarten Taste in der vorgegebenen Reihe angeordnet ist.

7. Tastatur nach Anspruch 6, wobei eine dritte Taste des wenigstens einen Abschnittes der Anzahl von Tasten in der vorgegebenen Reihe und in einer bestimmten Spalte zwischen der wenigstens ersten und zweiten Taste angeordnet ist, wobei die dritte Taste ein taktiles Merkmal (80) umfasst und wobei das taktile Merkmal der dritten Taste zwischen der ersten Fläche der dritten Taste und einer benachbarten Taste in der bestimmten Spalte angeordnet ist.

8. Tastatur nach Anspruch 5, wobei die zweite Fläche der wenigstens einen ersten Taste eine erste Seitenfläche (84) und eine zweite Seitenfläche (86) umfasst, wobei die erste Seitenfläche ein erstes Profil aufweist und zu der ersten Fläche der wenigstens einen ersten Taste benachbart angeordnet ist, wobei die zweite Seitenfläche ein zweites Profil, das zu dem ersten Profil unterschiedlich ist, aufweist.

9. Tastatur nach Anspruch 8, wobei die erste Seitenfläche eine Ausrundung (88) zu der ersten Fläche der wenigstens einen ersten Taste benachbart umfasst und wobei die zweite Seitenfläche wenigstens einen Abschnitt der Mantelfläche der wenigstens einen ersten Taste ist.

10. Tastatur nach Anspruch 8, wobei der zweite Abschnitt der zweiten Taste eine erste Seitenfläche und eine zweite Seitenfläche umfasst, wobei die erste Seitenfläche der zweiten Taste ein erstes Profil aufweist und zu der ersten Fläche der zweiten Taste benachbart angeordnet ist, wobei die zweite Seitenfläche der zweiten Taste ein zweites Profil, das zu dem ersten Profil der zweiten Taste unterschiedlich ist, aufweist, wobei die erste Seitenfläche der wenigstens einen ersten Taste und die erste Seitenfläche der zweiten Taste im Wesentlichen zueinander zugewandt sind, wobei die ersten Profile gleich sind.

11. Tastatur nach Anspruch 5, wobei die Tasten innerhalb des vorbestimmten Bereichs der Tastatur jeweils ein dazu zugeordnetes Zeichen aus unter den zehn arabischen einstelligen Zahlen, einem Sternchen und einem Symbol Pfund aufweisen und in einem Layout eines Tastentelefons für Tonwahl angeordnet sind.

12. Tastatur Anspruch 5, wobei die Tasten innerhalb des vorbestimmten Bereichs der Tastatur in einem Layout eines Tastentelefons für Tonwahl angeordnet sind und dazu zugeordnete Telefoneingabe-Zeichen (52) aufweisen.

13. Tastatur nach Anspruch 12, wobei die Tastatur eine erste Spalte von Tasten der Anzahl von Tasten, die zu dem vorbestimmten Bereich benachbart angeordnet sind, und eine zweite Spalte von Tasten der Anzahl von Tasten, die zu dem vorbestimmten Bereich benachbart angeordnet sind, umfasst,
wobei der vorbestimmte Bereich zwischen der ersten und zweiten Spalte angeordnet ist.

14. Tastatur nach Anspruch 12, wobei wenigstens einige der Tasten in dem vorbestimmten Bereich jeweils eine Anzahl von dazu zugeordneten Sprachelementen (48) aufweisen, wobei die Telefoneingabe-Zeichen auf den Tasten auf deren ersten Flächen dargestellt sind, wobei die Sprachelemente auf den Tasten auf deren zweiten Flächen dargestellt sind.

15. Tastatur nach Anspruch 5, wobei eine dritte Taste des wenigstens einen Abschnittes der Anzahl von Tasten zwischen der wenigstens einen ersten Taste und der zweiten Taste angeordnet ist, wobei die erste Fläche der wenigstens ersten, zweiten und dritten Taste und wenigstens ein Abschnitt der Mantelfläche von jeder einer Menge von zu der wenigstens einen ersten, zweiten und dritten Taste benachbarten Tasten zusammen wenigstens teilweise einen offenen und im Wesentlichen kontinuierlichen Kanal (96), der in der Tastatur gebildet ist, definieren.

16. Tastatur nach Anspruch 15, wobei sich der Kanal zwischen den dritten Abschnitten der wenigstens einen ersten und zweiten Taste erstreckt.

17. Tastatur nach Anspruch 15, wobei die Tasten in dem vorbestimmten Bereich in vier Reihen und drei Spalten in einem Layout eines Tastentelefons für Tonwahl angeordnet sind, wobei die Tasten in dem vorbestimmten Bereich, die in einer ganz linken Spalte von den drei Spalten angeordnet sind, jeweils einen dritten Abschnitt aufweisen, der ein taktiles Merkmal an einer linken Seite der Taste umfasst, wobei die Tasten in dem vorbestimmten Bereich, die in einer ganz rechten Spalte von den drei Spalten angeordnet sind, jeweils einen dritten Abschnitt aufweisen, der eine taktiles Merkmal an einer rechten Seite der Taste umfasst.

18. Tastatur nach Anspruch 1, wobei der dritte Abschnitt eine dritte Fläche (78) aufweist, wobei wenigstens ein Abschnitt der dritten Fläche wenigstens einen Abschnitt der Eingriffsfläche ist, wobei wenigstens ein Abschnitt der dritten Fläche zu wenigstens einem Abschnitt der zweiten Fläche benachbart und im Wesentlichen planparallel dazu angeordnet ist.

19. Tragbare elektronische Vorrichtung (4), umfassend:
Eine Prozessoreinrichtung (16), die einem Prozessor (20) und einen Speicher (24) umfasst,
eine Eingabeeinrichtung (8), die ausgebildet ist, der Prozessoreinrichtung eine Eingabe bereitzustellen,
eine Ausgabeeinrichtung (12), die ausgebildet ist, von der Prozessoreinrichtung ein Signal zu empfangen und eine Ausgabe bereitzustellen,
wobei die Eingabeeinrichtung eine Tastatur (36) nach Anspruch 5 oder einem der Ansprüche 13 bis 17 umfasst.

20. Tragbare elektronische Vorrichtung nach Anspruch 19, wobei der Speicher (24) eine Telefon-Routine (28), die auf dem Prozessor (20) ausführbar ist, umfasst, wobei die Tasten innerhalb des vorbestimmten Bereichs in einem Layout eines Tastentelefons für Tonwahl angeordnet sind und dazu zugeordnete Telefoneingabe-Zeichen (52) aufweisen und wobei eine Betätigung einer Taste innerhalb des vorbestimmten Bereichs angepasst ist, eine Telefoneingabe an die Telefon-Routine vorzusehen.

## Revendications

1. Clavier (36) destiné à un dispositif électronique portable (4), le clavier comprenant un certain nombre de touches (40) agencées en une pluralité de lignes (42) et une pluralités de colonnes (44), chaque touche possédant une surface d'engagement (60) qui est structurée pour être engagée par un utilisateur en activant la touche et une surface de jupe (64) adjacente à la surface d'engagement, chaque touche d'au moins une partie du certain nombre de touches comprenant une première partie (68) et une seconde partie (72), la première partie possédant une première surface (70), la seconde partie possédant une seconde surface (74), **caractérisé par :**
**le fait qu'**au moins une partie de la première surface, disposée de manière adjacente à au moins une partie de la seconde surface, soit disposée en oblique par rapport à l'au moins une partie de la seconde surface, qu'au moins une partie de la seconde surface soit disposée de manière adjacente à au moins une partie de la surface de jupe, qu'au moins une partie de chacune parmi les première et seconde surfaces soit au moins une partie de la surface d'engagement de la touche ;
**le fait qu'**au moins une partie d'une première surface d'une touche, disposée dans une ligne prédéterminée et dans une colonne prédéterminée, soit disposée de manière adjacente à au moins une partie d'une première surface d'une touche adjacente dans la ligne prédéterminée ;
**le fait qu'**au moins une partie de la première surface de la touche disposée dans la ligne prédéterminée et dans la colonne prédéterminée soit décalée dans une direction d'activation par rapport à au moins une partie d'une surface d'engagement d'une touche adjacente dans la colonne prédéterminée et soit disposée de manière adjacente à au moins une partie d'une surface de jupe de la touche adjacente dans la colonne prédéterminée pour permettre une distinction tactile entre la touche disposée dans la ligne prédéterminée et dans la colonne prédéterminée et la touche adjacente dans la colonne prédéterminée ; et
**le fait qu'**au moins une première touche parmi l'au moins une partie du certain nombre de touches comprenne de plus une troisième partie (76, 80), la, au moins une, première touche étant disposée dans une ligne donnée, la troisième partie comprenant une fonctionnalité tactile (94, 80) structurée pour présenter une distinction tactile entre la, au moins une, première touche et une touche adjacente dans la ligne donnée.

2. Clavier selon la revendication 1, dans lequel au moins une partie de la fonctionnalité tactile est disposée entre la première surface de la, au moins une, première touche et la surface d'engagement de la touche adjacente dans la ligne donnée.

3. Clavier selon la revendication 2, dans lequel la fonctionnalité tactile est une saillie qui sort à l'extérieur de la, au moins une, première touche.

4. Clavier selon la revendication 3, dans lequel au moins une partie de la fonctionnalité tactile est disposée en un endroit adjacent à la première surface.

5. Clavier selon la revendication 1, dans lequel une seconde touche de l'au moins une partie du certain nombre de touches comprend une troisième partie (76), la seconde touche étant disposée dans la ligne donnée, la troisième partie comprenant une fonctionnalité tactile (94) structurée pour permettre une distinction tactile entre la seconde touche et une touche adjacente dans la ligne donnée, les au moins une première et seconde touches étant disposées l'une dans une région prédéterminée (46) du clavier et adjacente à la région prédéterminée, les fonctionnalités tactiles des au moins une première et seconde touches étant structurées pour permettre une distinction tactile entre les touches disposées dans la région prédéterminée et les touches disposées hors de la région prédéterminée.

6. Clavier selon la revendication 5, dans lequel au moins une partie de la fonctionnalité tactile de la, au moins une, première touche est disposée entre la première surface de la, au moins une, première touche et la surface d'engagement d'une touche adjacente dans la ligne donnée, et dans lequel au moins une partie de la fonctionnalité tactile de la seconde touche est disposée entre la première surface de la seconde touche et la surface d'engagement d'une touche adjacente dans la ligne donnée.

7. Clavier selon la revendication 6, dans lequel une troisième touche de la, au moins une, partie du certain nombre de touches est disposée dans la ligne donnée et dans une colonne particulière entre les au moins une première et seconde touches, la troisième touche comprenant une fonctionnalité tactile (80), et dans lequel la fonctionnalité tactile de la troisième touche est disposée entre la première surface de la troisième touche et une touche adjacente dans la colonne particulière.

8. Clavier selon la revendication 5, dans lequel la seconde surface de la, au moins une, première touche comprend une première surface latérale (84) et une seconde surface latérale (86), la première surface latérale possédant un premier profil et étant disposée de manière adjacente à la première surface de la, au moins une, première touche, la seconde surface latérale possédant un second profil différent du premier profil.

9. Clavier selon la revendication 8, dans lequel la première surface latérale comprend un filet (88) adjacent à la première surface de l'au moins une première touche, et dans lequel la seconde surface latérale est au moins une partie de la surface de jupe de la, au moins une, première touche.

10. Clavier selon la revendication 8, dans lequel le seconde partie de la seconde touche comprend une première surface latérale et une seconde surface latérale, la première surface latérale de la seconde touche possédant un premier profil et étant disposée de manière adjacente à la première surface de la seconde touche, la seconde surface latérale de la seconde touche possédant un second profil différent du premier profil de la seconde touche, la première surface latérale de la, au moins une, première touche et la première surface latérale de la seconde touche se faisant face de manière générale, les premiers profils étant semblables.

11. Clavier selon la revendication 5, dans lequel les touches se trouvant dans la région prédéterminée du clavier possèdent chacune un caractère qui leur est assigné, choisi parmi les 10 chiffres arabes, un astérisque et un symbole dièse, et sont disposées suivant l'agencement téléphonique *Touch-Tone*.

12. Clavier selon la revendication 5, dans lequel les touches se trouvant dans la région prédéterminée du clavier sont agencées suivant une configuration téléphonique *Touch-Tone* et se voient assigner des caractères d'entrée téléphoniques (52).

13. Clavier selon la revendication 12, dans lequel le clavier comprend une première colonne de touches parmi le certain nombre de touches disposées de manière adjacente à la région prédéterminée et une seconde colonne de touches parmi le certain nombre de touches disposées de manière adjacente à la région prédéterminée, la région prédéterminée étant disposée entre les première et seconde colonnes.

14. Clavier selon la revendication 12, dans lequel au moins certaines parmi les touches de la région prédéterminée se voient chacune assigner un certain nombre d'éléments linguistiques (48), les caractères d'entrée téléphoniques étant représentés sur les touches sur leur première surface, les éléments linguistiques étant représentés sur les touches sur leur seconde surface.

15. Clavier selon la revendication 5, dans lequel une troisième touche de la, au moins une, partie du certain nombre de touches est disposée entre la, au moins une, première touche et la seconde touche, les premières surfaces des au moins une première, seconde et troisième touches et au moins une partie des surfaces de jupe de chacune parmi une certaine quantité de touches adjacentes aux au moins une première, seconde et troisième touches définissant ensemble au moins partiellement un canal ouvert et essentiellement continu (96) formé dans le clavier.

16. Clavier selon la revendication 15, dans lequel le canal s'étend entre les troisièmes parties des au moins une première et seconde touches.

17. Clavier selon la revendication 15, dans lequel les touches se trouvant dans la région prédéterminée sont configurées en quatre lignes et trois colonnes en suivant un agencement téléphonique *Touch-Tone,* les touches de la région prédéterminée disposées dans la colonne la plus à gauche parmi les trois colonnes possédant chacune une troisième partie comprenant une fonctionnalité tactile du côté gauche de la touche, les touches de la région prédéterminée disposées dans la colonne la plus à droite parmi les trois colonnes possédant chacune une troisième partie comprenant une fonctionnalité tactile située sur le côté droit de la touche.

18. Clavier selon la revendication 1, dans lequel la troisième partie possède une troisième surface (78), au moins une partie de la troisième surface étant au moins une partie de la surface d'engagement, au moins une partie de la troisième surface étant disposée de manière adjacente et essentiellement coplanaire à au moins une partie de la seconde surface.

19. Dispositif électronique portable (4), comprenant:
un dispositif processeur (16) comprenant un processeur (20) et une mémoire (24) ;
un dispositif d'entrée (8) structuré pour fournir des entrées au dispositif processeur ;
un dispositif de sortie (12) structuré pour recevoir un signal depuis le dispositif processeur et pour délivrer une sortie ;
dans lequel le dispositif d'entrée comprend un clavier (36) selon la revendication 5 ou l'une quelconque des revendications 13 à 17.

20. Dispositif électronique portable selon la revendication 19, dans lequel une mémoire (24) comprend un programme téléphonique (28) qui est exécutable sur le processeur (20), dans lequel les touches se trouvant dans la région prédéterminée sont agencées suivant une configuration téléphonique *Touch-Tone* et se voient affecter des caractères d'entrée téléphoniques (52), et dans lequel une activation d'une touche se trouvant dans la région prédéterminée est adaptée pour fournir une entrée téléphonique au programme téléphonique.
